# EUROPEAN PATENT SPECIFICATION

(11) **EP 3 922 077 B1**
(45) Date of publication and mention of the grant of the patent: **18.12.2024**
(21) Application number: 20713773.8
(22) Date of filing: 07.02.2020
(51) Int. Cl.: H04W 74/0833, H04W 36/00

(54) **BANDWIDTH PART FLEXIBILITY FOR UNLICENSED NR ACCESS**
BANDBREITENTEILFLEXIBILITÄT FÜR UNLIZENZIERTEN NR-ZUGRIFF
FLEXIBILITÉ DE PARTIE DE LARGEUR DE BANDE POUR UN ACCÈS NR SANS LICENCE

(30) Priority: 08.02.2019 SE 1930048
(43) Date of publication of application: 15.12.2021
(73) Proprietor: Sony Group Corporation, Tokyo 108-0075 (JP)
(72) Inventor: LJUNG, Rickard, 221 88 Lund (SE); BERGGREN, Anders, 221 88 Lund (SE)
(74) Representative: Kraus & Lederer PartGmbB
(86) International application number: PCT/US2020/017138
(87) International publication number: WO 2020/163672

(56) References cited:
- EP-A1- 3 591 887
- EP-A2- 3 641 393
- WO-A1-2019/139536
- WO-A1-2020/030973
- CN-A- 109 314 972
- US-A1- 2019 044 689
- CMCC: "Considerations on BWP switching and multi-activation for NR-U", vol. RAN WG2, no. Spokane, USA; 20181112 - 20181116, 2 November 2018 (2018-11-02), XP051482006, Retrieved from the Internet <URL:http://www.3gpp.org/ftp/tsg%5Fran/WG2%5FRL2/TSGR2%5F104/Docs/R2%2D1818129%2Ezip> [retrieved on 20181102]
- CMCC: "Considerations on BWP switching and multi-activation for NR-U", vol. RAN WG2, no. Spokane, USA; 20181112 - 20181116, 12 November 2018 (2018-11-12), XP051557634, Retrieved from the Internet <URL:http://www.3gpp.org/ftp/Meetings%5F3GPP%5FSYNC/RAN2/Docs/R2%2D1818129%2Ezip> [retrieved on 20181112]
- VIVO: "Discussion on initial access for NR-U", vol. RAN WG1, no. Spokane, USA; 20181112 - 20181116, 11 November 2018 (2018-11-11), XP051554206, Retrieved from the Internet <URL:http://www.3gpp.org/ftp/Meetings%5F3GPP%5FSYNC/RAN1/Docs/R1%2D1812301%2Ezip> [retrieved on 20181111]
- INTEL CORPORATION: "Enhancements to initial access and mobility for NR-unlicensed", vol. RAN WG1, no. Taipei, Taiwan; 20190121 - 20190125, 20 January 2019 (2019-01-20), XP051593384, Retrieved from the Internet <URL:http://www.3gpp.org/ftp/Meetings%5F3GPP%5FSYNC/RAN1/Docs/R1%2D1900471%2Ezip> [retrieved on 20190120]

## Description

### TECHNICAL FIELD OF THE INVENTION

The technology of the present disclosure relates generally to wireless communications in a network environment and, more particularly, to a method and apparatus for bandwidth part flexibility for unlicensed access.

### BACKGROUND

Demand for data traffic on wireless communications systems continues to increase. Wireless systems, such as fourth generation (4G) wireless systems (e.g., the Long Term Evolution (LTE) system), or systems standardized by the 3rd Generation Partnership Project (3GPP) (e.g., the LTE-Advanced (LTE-A) system) are commercially widespread. Currently, next generation wireless systems are being developed. One such system, by the 3GPP, is a fifth generation (5G) or New Radio (NR) wireless system.

The NR system, a first version of which was specified during 3GPP Release 15, is a communication protocol which (in this first version) is generally directed to enhanced mobile broadband (eMBB) that allows for large frequency band allocations, high order modulations, and advanced multi-antenna solutions. Moreover, the concept of bandwidth part (BWP) is introduced in the NR specification. Bandwidth parts (BWPs) allow a network communications system that operates within a given bandwidth to assign subsets of that bandwidth for a given network-to-wireless device link.

The NR protocol specifies a single initial BWP per cell for initial access by a wireless device to a network node of the network communications system. That is, under the NR protocol there is one BWP that a wireless device can use for initial access to a given network node (e.g., a base station).

The publication VIVO: "Discussion on initial access for NR-U", vol. RAN WG1, no. Spokane, USA; 20181112 - 20181116 11 November 2018 (2018-11-11) XP051554206 discloses discussions on synchronization raster in the unlicensed band, radio link monitoring in the unlicensed spectrum, and enhancement for 4-step RACH. In detail, according to an option, multiple initial active uplink BWPs, refening to IAU, should be included in SIB1, and UE can perform LBT on them in parallel. Further, if multiple initial active uplink BWP candidates containing RACH resources are indicated in SIB1, it is up to UE to select one BWP out of them to transmit PRACH.

### SUMMARY

NR standardization is also undergoing deployments on unlicensed RF bands. While a single bandwidth part for initial access by a wireless device to a network node may be reasonable for a NR deployment in a licensed radio frequency(RF) band, this design imposes limitations for NR use in an unlicensed RF band. In an unlicensed RF band, usage can be shared with other systems. Thus, an initial BWP falling in an unlicensed RF band can be susceptible to interference from other systems sharing the unlicensed band, and to channel conditions that change frequently. Consequently, the likelihood for a successful initial access by a wireless device over an initial bandwidth part in an unlicensed RF band is reduced as compared to initial access performed in a licensed RF range.

As detailed herein, multiple initial bandwidth parts provided by network nodes for initial access to the network can improve the functioning of the network by allowing for spectrum diversity when operating in an unlicensed RF band where the absence of interference from other transmitters on the unlicensed band cannot be guaranteed.

The invention is set out in the appended set of claims.

### BRIEF DESCRIPTION OF THE DRAWINGS

FIG. 1 is a schematic block diagram of a network communication system.
FIG. 2 is a schematic block diagram of an electronic device that forms part of the network communication system of FIG. 1.
FIG. 3 is a schematic block diagram of multiple initial bandwidth parts per node/cell of a network communications system.
FIG. 4 is a signaling diagram of an exemplary random access procedure of a wireless device from idle mode.
FIG. 5 is a signaling diagram illustrating an exemplary handover procedure using multiple initial bandwidth parts.
FIG. 6 is a flow-diagram of a representative method of determining an initial bandwidth part for random access transmission based on network condition information.
FIG. 7 is a flow-diagram of a representative method of determining an initial bandwidth part for random access transmission based on measurements of initial bandwidth parts.
FIG. 8 is a flow-diagram of a representative method of determining an initial bandwidth part for random access transmission based on measurements of initial bandwidth parts.
FIG. 9 is a flow-diagram of a representative method of generating a handover command based on a measurement condition.
FIG. 10 is a flow-diagram of a representative method of determining a preferred initial bandwidth part based on a conditional handover command.
FIG. 11 is a flow-diagram of a representative method of determining an initial bandwidth part for random access transmission based on a paging method.

### DETAILED DESCRIPTION OF EMBODIMENTS

### Introduction

Embodiments will now be described with reference to the drawings, wherein like reference numerals are used to refer to like elements throughout. It will be understood that the figures are not necessarily to scale. Features that are described and/or illustrated with respect to one embodiment may be used in the same way or in a similar way in one or more other embodiments and/or in combination with or instead of the features of the other embodiments.

Described below, in conjunction with the appended figures, are various embodiments of systems and methods for bandwidth part (BWP) flexibility for initial access to a wireless communications system over an unlicensed RF range. In accordance with an embodiment, a network node of a network communications system can configure and provide multiple initial bandwidth parts, which are smaller portions of a carrier, or total system bandwidth. The network node can provide the initial bandwidth parts for initial access to the network node by a wireless device. A wireless device can perform random access transmissions on one of the provided initial bandwidth parts.

### System Architecture

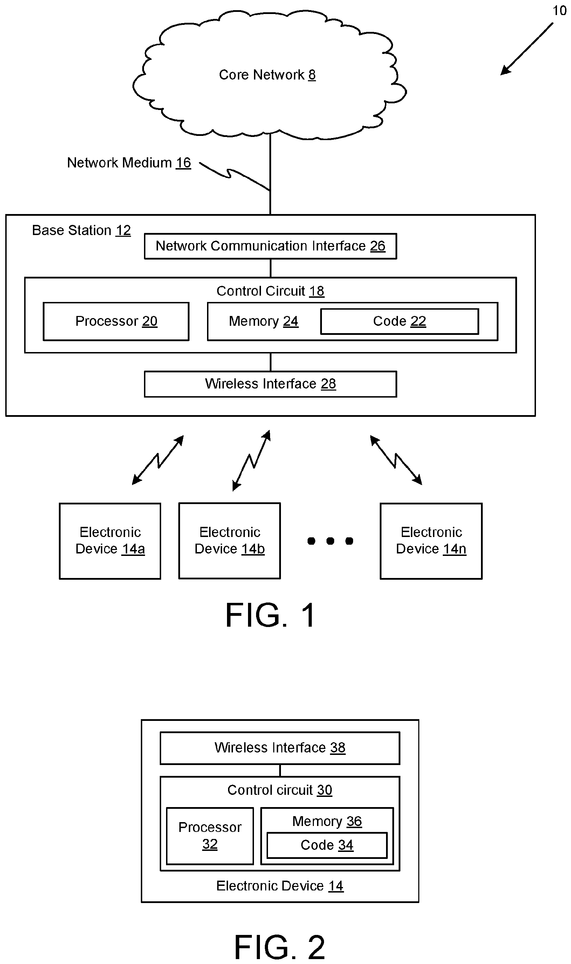

FIG. 1 is a schematic diagram of an exemplary network communication system 10 for implementing the disclosed techniques. It will be appreciated that the illustrated communication system is representative and other systems may be used to implement the disclosed techniques. The exemplary network system 10 includes a network node 12 (also referred to as base station 12) that operates in accordance with a cellular protocol, such as a protocol promulgated by 3GPP or another standard. For instance, the network system 10 may operate in accordance with LTE, LTE-A, or 5G NR standards. The cellular protocol or standard may be defined for and operate in an unlicensed spectrum (e.g., New Radio Unlicensed (NR-U)). However, it is to be appreciated that the techniques described herein can be applied to substantially any wireless communications system to enable BWP flexibility for initial access to the communications system.

The network communication system 10 of the illustrated example can support cellular-type protocols that may include circuit-switched network technologies and/or packet-switched network technologies. The network communication system 10 includes a base station 12 that services one or more electronic devices 14 (also referred to herein as user equipments (UEs), wireless communications devices, or wireless devices), designated as electronic devices 14a through 14n in FIG. 1. The base station 12 may support communications between the electronic devices 14 and a network medium 16.

Network medium 16 may facilitate communication between network node 12 to core network 8. Core network 8 may include other base stations, electronic devices, servers, etc. For example, the core network may include a Mobility Management Entity (MME) node that acts as a main signaling node in an LTE Evolved Packet Core (EPC) architecture, or an Access and Mobility Management Function (AMF) node. Such nodes in the core network can serve wireless devices with Non Access Stratum (NAS) signaling functionality such as attachment and registration. Also, the core network can initiate paging of the electronic devices 14, and can establish and configure data connections between electronic devices 14 and other core network components, or, e.g., devices on the internet.

The base station 12 may be an access point, an evolved NodeB (eNB) in a 4G network, a next generation NodeB (gNB) in a 5G or NR network, or another network node. As utilized herein, the term "base station" may refer, generally, to any device or network node that enables or facilitates radio communications (i.e., provides a radio interface) between the user devices and the network medium and network communication system. Base station 12 provides an interface to electronic devices 14, or to other nodes in the network communications system 10, to access services provided by core network 8, such as attachment services, paging services, etc. Additionally, the term base station may refer to a transmission radio point (TRP) which may include all or parts of gNB functionality as described above. Accordingly, a base station includes the specific examples above and other supporting network nodes depending on the network implementation.

As noted, network communication system 10 may be, for example, a NR-based system. A carrier, or total system, bandwidth in NR systems may be wide (e.g. 1 GHz). The total system bandwidth may be in a licensed or an unlicensed spectrum. The network communications system 10 may assign user devices to utilize a smaller portion (e.g., a sub-range) of bandwidth as compared to the total system bandwidth. The smaller portion may be referred to as a bandwidth part (BWP). In NR systems, for example, a bandwidth part consists of a group of contiguous physical resource blocks (PRBs). In accordance with an embodiment, network node 12 may provide multiple initial bandwidth parts any of which can be used by a wireless device to perform random access.

As used herein, an initial bandwidth part (also known as an initial uplink bandwidth part) refers to a bandwidth part used for random access by a wireless device. Random access refers to a procedure by which a wireless device initiates/establishes a UE-specific connection (e.g. prior to receiving or transmitting data) with a network node (e.g., a base station). Random access can occur in order to bring a wireless device from an idle state to a connected state. For example, a device that is not transferring data to a network node can perform random access in order to initiate data transfer with the network node. Additionally, random access can occur at handover of a connected wireless device from one network node to another network node. For example, a wireless device that is connected to a first network node can perform random access via a specified bandwidth part of a second network node as part of the handover from the first network node to the second network node.

In order to facilitate random access by a wireless device, a base station can periodically transmit/broadcast a synchronization signal block (SSB). The SSB may include synchronization signal elements such as the primary Synchronization Signal (PSS), the Secondary Synchronization Signal (SSS), the public broadcast channel (PBCH), and system information block 1 (SIB1). A wireless device attempting to initiate a data transfer with a network node receives synchronization signals available in the SSB. The wireless device can synchronize with the downlink channel by decoding the PSS and SSS. After synchronizing with the downlink channel, the wireless device is synchronized to the downlink frames.

After downlink synchronization, the wireless device can continue to receive and process additional parameters provided via the PBCH. Such additional information (referred to herein as control information) can include information on one or more initial bandwidth parts and the assigned resources for random access transmission (RACH resources) on these initial bandwidth parts. For example, the additional information can include system information block 1 (SIB1) which, in turn, can include information on one or more initial bandwidth parts and the assigned resources for random access transmission (RACH resources) on these initial bandwidth parts. Once the initial bandwidth part and RACH resources are determined, the wireless device can use the determined initial bandwidth part to transmit a random access preamble (RACH initiation).

In accordance with an embodiment, the base station 12 may provide a plurality of initial bandwidth parts, and may receive random access transmission from a wireless device 14 on any of the provided initial bandwidth parts. Additionally, base station 12 may perform wireless communications, and other functions of the base station 12. For instance, the base station 12 may include a control circuit 18 that is responsible for overall operation of the base station 12, including controlling the base station 12 to carry out the operations described in greater detail below. The control circuit 18 can include a processor 20 that executes code 22, such as an operating system and/or other applications. The functions described in this disclosure document may be embodied as part of the code 22 or as part of other dedicated logical operations of the base station 12. The logical functions and/or hardware of the base station 12 may be implemented in other manners depending on the nature and configuration of the base station 12. Therefore, the illustrated and described approaches are just examples and other approaches may be used including, but not limited to, the control circuit 18 being implemented as, or including, hardware (e.g., a microprocessor, microcontroller, central processing unit (CPU), etc.) or a combination of hardware and software (e.g., a system-on-chip (SoC), an application-specific integrated circuit (ASIC), etc.).

The code 22 and any stored data (e.g., data associated with the operation of the base station 12) may be stored on a memory 24. The code may be embodied in the form of executable logic routines (e.g., a software program) that are stored as a computer program product on a non-transitory computer readable medium (e.g., the memory 24) of the base station 12 and is executed by the processor 20. The functions described as being carried out by the base station 12 may be thought of as methods that are carried out by the base station 12.

The memory 24 may be, for example, one or more of a buffer, a flash memory, a hard drive, a removable media, a volatile memory, a non-volatile memory, a random access memory (RAM), or other suitable device. In a typical arrangement, the memory 24 includes a non-volatile memory for long term data storage and a volatile memory that functions as system memory for the control circuit 18. The memory 24 is considered a non-transitory computer readable medium.

The base station 12 includes communications circuitry that enables the base station 12 to establish various communication connections. For instance, the base station 12 may have a network communication interface 26 to communicate with the network medium 16. Also, the base station 12 may have a wireless interface 28 over which wireless communications are conducted with the electronic devices 14, including the dynamic bandwidth allocations described herein. The wireless interface 28 may include a radio circuit having one or more radio frequency transceivers (also referred to as a modem), at least one antenna assembly, and any appropriate tuners, impedance matching circuits, and any other components needed for the various supported frequency bands and radio access technologies.

The electronic devices 14 serviced by the base station 12 may be user devices, also known as user equipments or UEs, wireless communications devices, or machine-type devices. Exemplary electronic devices 14 include, but are not limited to, mobile radiotelephones ( such as "smartphones"), tablet computing devices, computers, a device that uses machine-type communications, machine-to-machine (M2M) communications or device-to-device (D2D) communication (e.g., a sensor, a machine controller, an appliance, etc.), a camera, a media player, or any other device that conducts wireless communications with the base station 12. Such devices are referred to herein, generally, as wireless devices.

As shown in FIG. 2, each electronic device 14 may include operational components for carrying out the wireless communications, the bandwidth part flexibility described herein, and other functions of the electronic device 14. For instance, among other components, each electronic device 14 may include a control circuit 30 that is responsible for overall operation of the electronic device 14, including controlling the electronic device 14 to carry out the operations described in greater detail below. The control circuit 30 includes a processor 32 that executes code 34, such as an operating system and/or other applications. The functions described in this disclosure document may be embodied as part of the code 34 or as part of other dedicated logical operations of the electronic device 14. The logical functions and/or hardware of the electronic device 14 may be implemented in other manners depending on the nature and configuration of the electronic device 14. Therefore, the illustrated and described approaches are just examples and other approaches may be used including, but not limited to, the control circuit 30 being implemented as, or including, hardware (e.g., a microprocessor, microcontroller, central processing unit (CPU), etc.) or a combination of hardware and software (e.g., a system-on-chip (SoC), an application-specific integrated circuit (ASIC), etc.).

The code 34 and any stored data (e.g., data associated with the operation of the electronic device 14) may be stored on a memory 36. The code 34 may be embodied in the form of executable logic routines (e.g., a software program) that is stored as a computer program product on a non-transitory computer readable medium (e.g., the memory 36) of the electronic device 14 and is executed by the processor 32. The functions described as being carried out by the electronic device 14 may be thought of as methods that are carried out by the electronic device 14.

The memory 36 may be, for example, one or more of a buffer, a flash memory, a hard drive, a removable media, a volatile memory, a non-volatile memory, a random access memory (RAM), or other suitable device. In a typical arrangement, the memory 36 includes a non-volatile memory for long term data storage and a volatile memory that functions as system memory for the control circuit 30. The memory 36 is considered a non-transitory computer readable medium.

The electronic device 14 includes communications circuitry that enables the electronic device 14 to establish various communication connections. For instance, the electronic device 14 may have a wireless interface 38 over which wireless communications are conducted with the base station 12, including the bandwidth part flexibility and random access procedures described herein. The wireless interface 38 may include a radio circuit having one or more radio frequency transceivers (also referred to as a modem), at least one antenna assembly, and any appropriate tuners, impedance matching circuits, and any other components needed for the various supported frequency bands and radio access technologies.

Other components of the electronic device 14 may include, but are not limited to, user inputs (e.g., buttons, keypads, touch surfaces, etc.), a display, a microphone, a speaker, a camera, a sensor, a jack or electrical connector, a rechargeable battery and power supply unit, a SIM card, a motion sensor (e.g., accelerometer or gyro), a GPS receiver, and any other appropriate components.

### INITIAL BANDWIDTH PART FLEXIBILITY

The network communication system 10 can utilize multiple initial bandwidth parts to improve the performance of initial access by a wireless device to a network node over unlicensed RF bands used by a NR system. This improved performance can be implemented and realized from a wireless device in an idle mode initiating contact with the network communication system, and during handovers of a wireless device between network nodes.

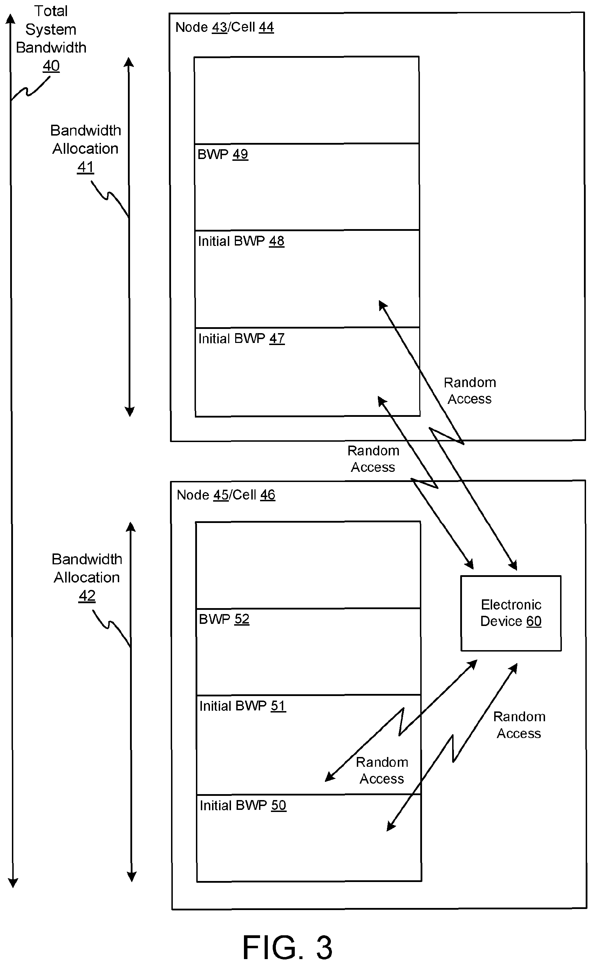

With reference to FIG. 3, an exemplary schematic diagram of multiple initial bandwidth parts per node/cell of a network communications system is illustrated. As shown in FIG. 3, a total system bandwidth 40 of a network communications system, which may be an unlicensed RF band, can be segmented into multiple subsections or portions referred to herein as bandwidth parts.

Transmissions, including broadcasts, from node 43 can define a first cell 44 within the network communications system. Likewise, transmissions, including broadcasts, from node 45 can define a second cell 46 within the network communications system. Portions of total system bandwidth 40 can be allocated among the different nodes/cells of the network communications system. For example, bandwidth allocation 41, which is a portion of total system bandwidth 40, can be allocated to node 43 for use in cell 44. Likewise, bandwidth allocation 42, which is also a portion of total system bandwidth 40 (in this example, a distinct portion), can be allocated to node 45 for use in cell 46.

Figure 3 illustrates an example where node 43 and node 45 are allocated separate non-overlapping bandwidth allocations (41 and 42). Other embodiments are possible where, e.g., multiple cells use overlapping bandwidth allocations. As one example 41 and 42 may be the same frequency allocations. As another example 41 and/or 42 may be allocated to use the complete system bandwidth 40.

Bandwidth allocated among nodes/cells of a network communications system can be further segmented into bandwidth parts. As additionally shown in FIG. 3, bandwidth allocation 41 is further segmented into bandwidth parts 47-49. Bandwidth allocation 42 is further segmented into bandwidth parts 50-52. The number of bandwidth parts shown in FIG. 3 is exemplary, and more or less bandwidth parts than the number shown in FIG. 3 can be configured for a given node/cell. Further, different bandwidth part configurations (not shown in FIG. 3) are possible, e.g. where different bandwidth parts are overlapping in frequency. As one example, a first bandwidth part for a bandwidth allocation may comprise a full total system bandwidth, while another bandwidth part may consist of a subset of the first bandwidth part. Also, it is not required that there are configured bandwidth parts for the whole system bandwidth nor for the whole bandwidth allocation for a separate cell. For example, an initial bandwidth part may be a smaller subset of another bandwidth part. According to an exemplary embodiment, total system bandwidth 40 may be 1 GHz for NR systems and may be an unlicensed RF band. Bandwidth parts 47-52 may be on the order of hundreds of megahertz.

In accordance with an embodiment, multiple bandwidth parts allocated to each node/cell can be configured as initial bandwidth parts. As shown in FIG. 3, BWPs 50 and 51 can be configured as initial BWPs provided by node 45. Electronic device 60 is shown camping in cell 46. In a scenario where electronic device 60 is initiating access with node 45, electronic device 60 can receive control information, including SIB1, that is broadcast from node 45. SIB1 can include information pertaining to each of the multiple initial bandwidth parts provided by node 45 (i.e., initial bandwidth parts 50 and 51), and the assigned resources for random access transmission (RACH resources) on each initial bandwidth part provided by node 45. Electronic device 60 can transmit a random access preamble (RACH initiation) on either initial bandwidth part 50 or initial bandwidth part 51 to initiate uplink communication with node 45.

The ability to perform random access on either initial bandwidth part 50 or 51 allows for spectrum diversity when, e.g., operating in an unlicensed RF band. That is, multiple initial bandwidth parts allow for random access on the bandwidth part having less interference, channel occupancy, etc., and therefore a greater chance of successful random access by a wireless device.

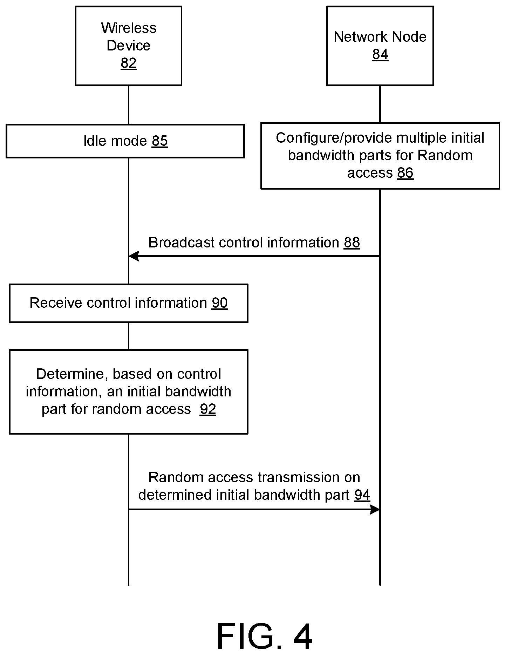

Each of figures 4-11 is a signaling diagram, or a flow-diagram, of exemplary embodiments of the present invention. Although illustrated in a logical progression, the illustrated blocks and/or signaling steps of these figures may be carried out in other orders and/or with concurrence between two or more blocks/steps. Therefore, the illustrated diagram may be altered (including omitting steps), and steps from one figure may be used with steps from other figures to form different embodiments.

FIG. 4 is a signaling diagram of a wireless device in idle mode. FIG. 4 includes wireless device 82 and network node 84. As illustrated, wireless device 82 begins in idle mode 85. That is, wireless device 82 is not connected to, and not transferring data with, any network node. At block 86, the network node 84 can configure and/or provide multiple initial bandwidth parts over which random access transmission may be performed by wireless device 82. At step 88, network node 84 can broadcast control information, including SIB 1. At step 90, the control information is received by wireless device 82. An initial bandwidth part for random access transmission is determined by the wireless device at step 92. At step 94, wireless device 82 performs random access transmission on the determined initial bandwidth part.

In accordance with an embodiment, multiple initial bandwidth parts can also be provided for random access in a handover scenario where a wireless device is being handed over from one network node to another network node. Referring again to FIG. 3, a handover scenario is illustrated where electronic device 60 is handed over from node 45 to node 43, in accordance with an embodiment.

BWPs 47 and 48 can be configured as initial BWPs provided by node 43. Electronic device 60 may be in a connected mode, and may be connected to node 45. While connected to node 45, electronic device 60 can evaluate control information, including SIB1, that is broadcast from node 43. The control information (including SIB1) broadcast by node 43 can include information on each of the multiple initial bandwidth parts provided by node 43 (i.e., initial bandwidth parts 47 and 48) ), and the assigned resources for random access transmission (RACH resources, e.g., random access preamble transmission) on each initial bandwidth part provided by node 43. Electronic device 60 can relay these evaluations of the control information of node 43 back to node 45 and the network communication system.

Based on the relayed evaluations of the control information, the network communication system (e.g., network communication system 10), can determine that a handover to node 43 is appropriate. Electronic device 60 may then receive a handover command from the network communication system, via node 45, indicating that electronic device 60 is to be handed over to node 43. In response to the handover command, electronic device 60 can attempt to initiate contact with node 43. Electronic device 60 can transmit a random access preamble (RACH initiation) on either initial bandwidth part 47 or initial bandwidth part 48 to initiate uplink communication with node 43. Once uplink communication is established on either initial bandwidth part 47 or initial bandwidth part 48, the handover to node 43/cell 44 can proceed.

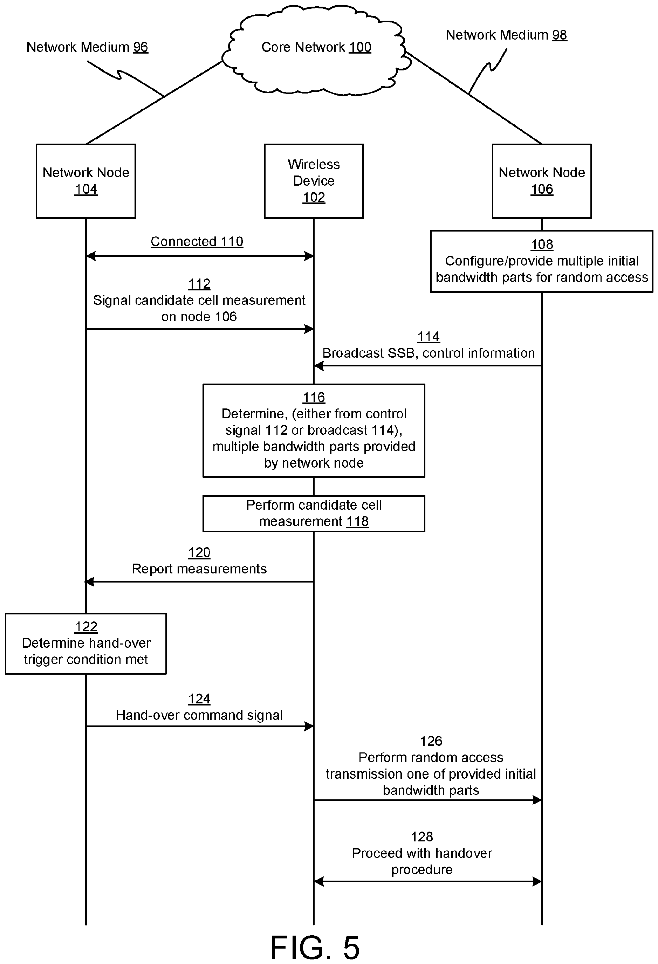

FIG. 5 is a signaling diagram of an exemplary handover procedure, in accordance with an embodiment. FIG. 5 includes wireless device 102, network node 104, and network node 106. FIG. 5 also includes core network 100. Network node 104 and network node 106 are connected to core network 100 vie network medium 96 and network medium 98, respectively. Network node 104 represents a serving node. Wireless device 102 is in a connected mode and connected 110 to network node 104.

At block 108, network node 106 provides multiple initial bandwidth parts for random access. The multiple initial bandwidth parts 108 may be defined by components of core network 100. Core network 108 may be configured by components of core network 100 to provide multiple initial bandwidth parts 108.

Network node 104 can send a command signal 112 to wireless device 102 that configures wireless device 102 to perform candidate node/cell measurements on neighboring nodes/cells. This command signal can include which neighboring cells to perform candidate cell measurements on. For example, in the illustrated embodiment, the command signal 112 can include instructions to perform candidate cell measurements on network node 106 and its corresponding cell.

In accordance with an embodiment, network node 104 is aware of the multiple initial bandwidth parts configured for, and provided by, network node 106. For example, network node 104 may be aware of the multiple initial bandwidth parts configured for network node 106 via communications with core network 100. In such an embodiment, network node 104 may provide wireless device 102 with indications of the multiple initial bandwidth parts configured for network node 106 in the command signal 104. In this scenario, wireless device 102 will be aware of the multiple initial bandwidth parts provided by network node 106 prior to analyzing control information from network node 106.

Network node 106 can periodically broadcast synchronization signals available in the SSB, including control information. The broadcast control information can include information on one or more initial bandwidth parts provided by network node 106 and the assigned resources for random access transmission (RACH resources) on these initial bandwidth parts. At step 114, network node 106 can broadcast SSB and control information and wireless device 102 can receive the broadcast control information. In an embodiment where network node 104 is not aware of the multiple initial bandwidth parts provided by network node 106, or where the multiple initial bandwidth parts provided by network node 106 are not indicated in the command signal 112, wireless device 102 can determine the multiple initial bandwidth parts provided by network node 106 from the broadcast control information 114.

In accordance with an embodiment, at block 116, wireless device 102 determines - either based on command signal 112 (embodiment not covered by the present claims) or the broadcast control information 114-the multiple initial bandwidth parts provided by network node 106. Wireless device 102 performs candidate cell measurement at block 118, e.g., on each determined initial bandwidth part. At step 120, wireless device 102 reports the measurements to network node 104. At block 122, based on the reported measurements 118, network node 104 determines that a trigger condition has been met, the trigger condition indicating that a handover of wireless device 102 to network node 106 is appropriate. In response to the determination that the trigger condition has been met, network node 104 sends a handover command signal 124 to wireless device 102. At step 126 wireless device 102 performs random access transmission on one of the initial bandwidth parts provided by network node 106. At step 128, the handover procedure between wireless device 102 and network node 106 is continued.

In an exemplary embodiment, the network communication system can provide regular network condition information indicative of signal quality on one or more of the multiple initial bandwidth parts. The network condition information can include indications of measured channel occupancy, historical access probability (e.g., a listen-before-talk (LBT) success ratio) and/or similar indications of an initial BWP's signal quality.

The network communications system can use the network condition information to determine a preferred initial bandwidth part for random access by a wireless device. Alternatively, the network communications system can provide the wireless device with the network condition information in order to enable the wireless device to determine, based at least partially on the provided network condition information, a preferred initial bandwidth part for random access by a wireless device.

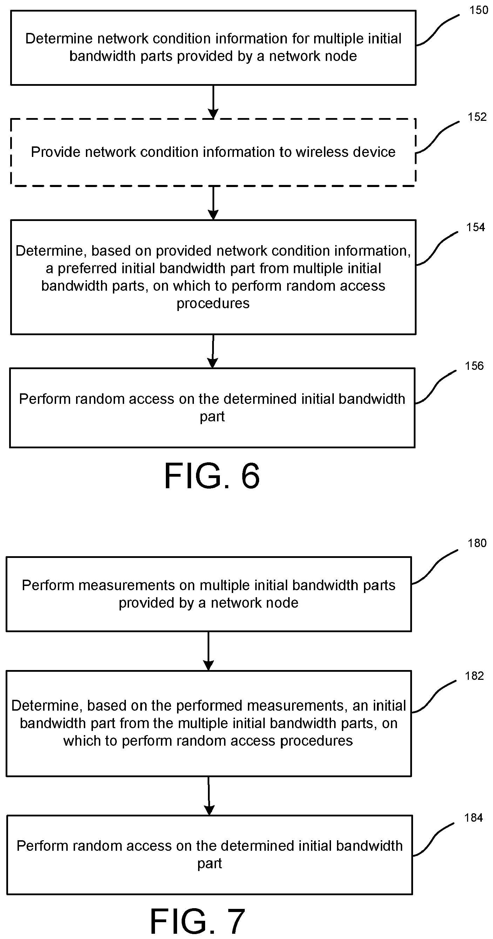

FIG. 6 is a flow-diagram of a representative method of determining an initial bandwidth part for random access transmission based on network condition information, in accordance with an embodiment not covered by the present claims. At step 150, network condition information is determined for multiple initial bandwidth parts provided by a network node. For example, a network node can measure channel occupancy, historical access probability (e.g., a listen-before-talk (LBT) success ratio) and/or similar indications of an initial BWP's signal quality.

At step 152 (an optional step indicated by the broken lines enclosing the step), the determined network condition information is provided to a wireless device, e.g., via control information transmitted from a network node. At step 154, an initial bandwidth part on which to perform random access can be determined based on the provided network condition information. In one embodiment, step 154 can be performed, e.g., by the network node that provided the network condition information. In an embodiment that includes step 152, the wireless device that received the network condition information may determine the preferred initial bandwidth part based on the network condition information. At step 156, random access can be performed on the determined initial bandwidth part by the wireless device.

Network condition information for the initial BWPs of a node/cell that a wireless device is attempting to initiate communication with, e.g., from an idle state, may be provided to a wireless device in the synchronization blocks, e.g., in SIB1. Thus, with additional reference to FIG. 4, network condition information may be provided via broadcast control information 88 from node 84. In accordance with an embodiment, network condition information for the initial BWPs of inter/intra frequency neighbor nodes/cells (i.e. a candidate node/sell) may also be provided via broadcast control information 88 from node 84. For instance, network condition information for the initial BWPs of candidate cells may be transmitted in SIB3 or SIB4, which may be included in synchronization blocks.

Additionally, network condition information regarding multiple bandwidth parts of a candidate cell can be provided to a wireless device during the hand-off procedure to the candidate cell. In one embodiment (referring now to FIG. 5), serving/connected node 104 may provide network condition information via the command signal 112 to wireless device 102. Alternatively, network node 106 may provide network information in broadcast control information 114 (as noted above, e.g., in SIB3 or SIB4).

In accordance with an exemplary embodiment, a wireless device can perform measurements on initial bandwidth parts provided via synchronization signals from a base station to determine the downlink signal quality experienced by the wireless device on each of the measured initial bandwidth parts. Such measurements may be performed by the wireless device on the regularly network-transmitted synchronization signal bursts. The frequency-dependent channel conditions and the interference on a bandwidth part in an unlicensed band can differ. Thus, in an exemplary embodiment, the wireless device may consider these measurements when determining which initial BWP to perform random access transmission on. By considering such measurements of the provided initial bandwidth parts, the wireless device can determine the initial bandwidth part having the most favorable channel conditions and/or the least amount of interference on which to perform random access.

FIG. 7 is a flow-diagram of a representative method of determining an initial bandwidth part for random access transmission based on measurements of initial bandwidth parts, in accordance with an embodiment not falling under the scope of protection of the present claims. At step 180, measurements can be performed by a wireless device on multiple initial bandwidth parts provided by a network node. At step 182, a preferred initial bandwidth part on which to perform random access is determined from among the multiple received initial bandwidth parts. The determination of step 182 is based, at least partially, on the performed measurements. At step 184, random access transmission is performed on the determined initial bandwidth part.

A wireless device preparing for a handover may evaluate, via measurements (as discussed above), the two or more initial BWPs provided on the node/cell being considered for handover (i.e., the candidate node/cell to which the wireless device will be handed over). The wireless device can report the measurements of the initial BWPs provided by the candidate node/cell to the node of the active or currently-servicing cell in a measurement report. Such an evaluation/report of the provided initial bandwidth parts of a handover candidate cell is referred to herein as a candidate cell measurement/candidate cell measurement report.

In accordance with an embodiment, a candidate cell measurement/report may include measurements indicative of signal strength and signal quality. Additionally, the candidate cell measurement/report may include channel sensing information for the initial BWPs (e.g. channel occupancy or other sensing metrics that measure the current usage of the measured frequency). The candidate cell measurement/report may also include a preference indicator indicative of a preferred initial BWP based on the measurements taken by the wireless device. The preference indicator can indicate an initial BWP of the multiple initial bandwidth parts having a good probability for a successful random access transmission based on the candidate cell measurement. A wireless device may uses the bandwidth part indicated by the preference indicator for random access.

Alternatively, the wireless device can report the channel sensing information and/or the preference indicator to the servicing network node, which may then issue a handover command to the wireless device that specifies a particular one of the multiple initial bandwidth parts provided by the candidate network node for random access in the handover procedure. The specified particular one of the multiple initial bandwidth parts can be determined by the network communication system based on the reported channel sensing information or the reported preference indicator.

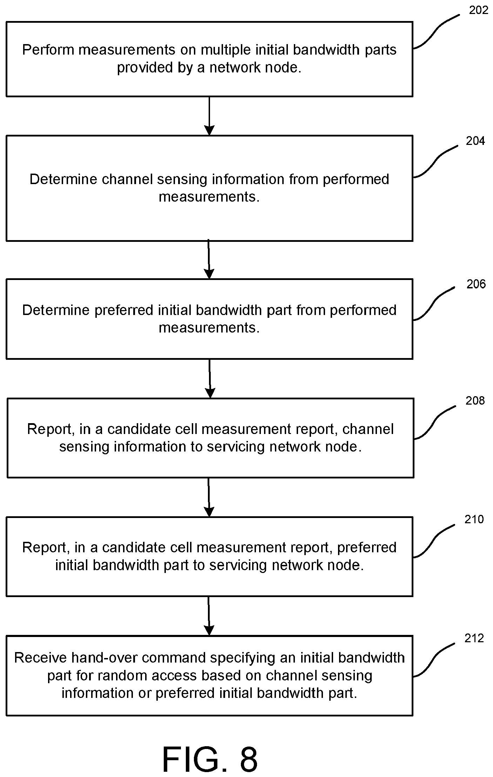

FIG. 8 is a flow-diagram of a representative method of determining an initial bandwidth part for random access transmission based on measurements of initial bandwidth parts, in accordance with an embodiment not falling under the scope of protection of the present claims. At step 202, a wireless device can perform measurements on multiple initial bandwidth parts provided by a network node. At step 204, the wireless device can determine channel sensing information based on the performed measurements. At step 206, the wireless device can determine a preferred initial bandwidth part based on the performed measurements. The wireless device can report the channel sensing information and the preferred initial bandwidth part to the servicing network node at steps 208 and 210, respectively. At step 212, the wireless device can receive a handover command specifying an initial bandwidth part for random access based on the reported channel sensing information or the reported preferred initial bandwidth part.

In accordance with an embodiment, a wireless device can be configured with measurement trigger conditions. The trigger conditions, when met, can indicate acceptable parameters for a handover of a wireless device from one node/cell to another node/cell. The measurement trigger conditions may be defined and relayed to the wireless device via the network communications system, for example, by/via a network node.

A wireless device that performs candidate cell measurement can report a measurement trigger event. Upon detecting that a measurement trigger event has occurred a wireless device can report to the network communication system that a measurement trigger condition has been met. The report may be merely an indication that a defined measurement trigger has been met, or the report may include a value of a measured attribute that is in excess of a threshold value defined for the attribute. Exemplary attributes include signal strength, Reference Signal Received Power (RSRP), Reference Signal Received Quality (RSRQ), signal-to-noise ratio (SINR), channel occupancy, etc.

A wireless device can perform multiple channel sensing procedures on one or more of the initial BWPs provided by a candidate cell (e.g., sensing procedures the wireless device would perform in an attempt to access a given channel). The wireless device can report a measurement trigger event to the servicing network node when/if the channel sensing procedure success rate is higher than a threshold. The threshold may be defined by the network communication system (e.g., the core network depicted in FIG. 1).

The communications network (e.g., a network node) may transmit a handover command to a wireless device based on a reported measurement trigger event or reported measurements of the provided initial BWPs of a candidate node/cell.

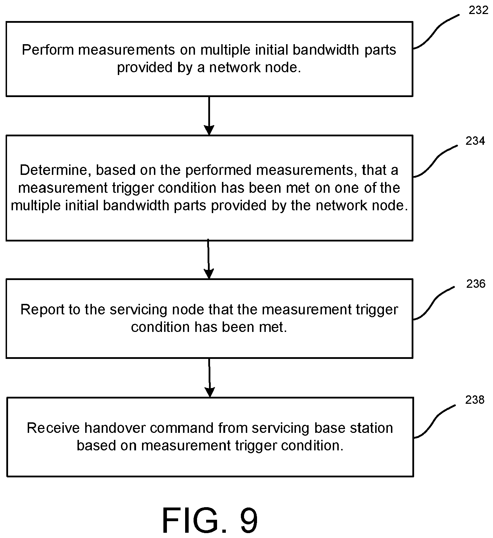

FIG. 9 is a flow-diagram of a representative method of generating a handover command based on a measurement condition, in accordance with an embodiment not falling under the scope of protection of the present claims.

At step 232 a wireless device can perform measurements on multiple initial bandwidth parts provided by a network node. At step 234, the wireless device can determine, based on the performed measurements, that a measurement trigger condition has been met on one of the multiple initial bandwidth parts provided by the network node. The wireless device can report that the trigger condition has been met to the servicing node at step 236. At step 238, the wireless device can receive a handover command from servicing base station based on measurement trigger condition. The received handover command can include an indication of a preferred initial bandwidth part provided by the candidate network node for random access, which can be the initial bandwidth part for which the measurement trigger condition was met.

In yet another embodiment, the communications network can use reported measurements of the provided initial BWPs of multiple candidate nodes/cells to transmit a conditional handover command message to a wireless device, including multiple initial BWPs on multiple candidate nodes/cells that are acceptable for a handover. Upon receipt of such a conditional handover command message, the wireless device can determine a preferred initial bandwidth part from the multiple initial BWPs indicated in the conditional handover command message based on a measurement trigger condition being met. The wireless device can then perform random access transmission on the preferred initial bandwidth part.

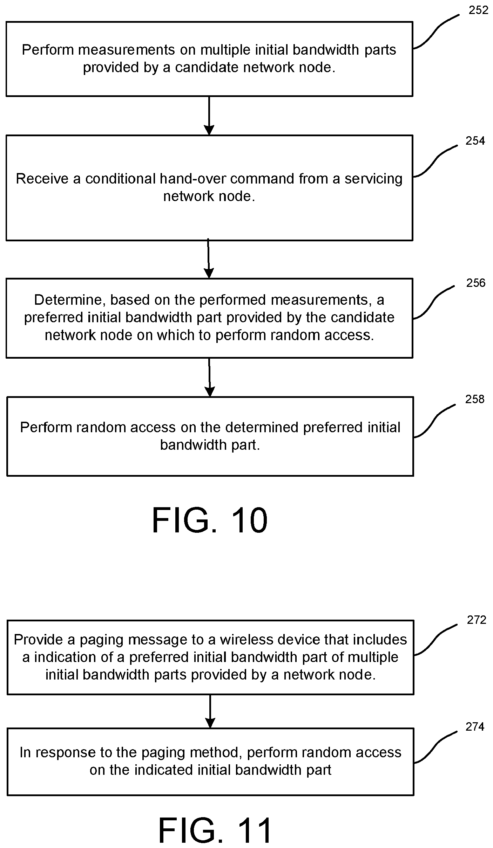

FIG. 10 is a flow-diagram of a representative method of determining a preferred initial bandwidth part based on a conditional handover command, in accordance with an embodiment not falling under the scope of protection of the present claims. At step 252, a wireless device can perform measurements on multiple initial bandwidth parts provided by a candidate network node. At step 254, the wireless device can receive a conditional handover command from a servicing network node. At step 256, the wireless device can determine, based on the performed measurements, a preferred initial bandwidth part provided by the candidate network node on which to perform random access. At step 258, the wireless device can perform random access on the determined preferred initial bandwidth part.

In exemplary embodiments, measurements performed by a wireless device, such as those described, e.g., in FIG. 7, can be considered along with network condition information provided by the network communication system (described above) when a preferred initial bandwidth part is being determined. A determination based on both wireless device measurements and network condition information can be performed by either the wireless device or a network node.

In accordance with an embodiment, the network communication system (e.g., a network node) can send a paging message to a wireless device. The paging message can initiate/trigger the random access procedure. In such an embodiment, the paging signal may include information indicative of which of the available initial BWPs the network communications system has determined is a preferred (i.e., a most suitable) initial bandwidth part for random access. Such a determination can be based on, e.g., network condition information as determined by a network node (as discussed above), wireless device measurements of the provided initial bandwidth parts, (also as discussed above), or a combination of these two features.

In accordance with an embodiment, network nodes can specify, in the paging method, a mandatory initial bandwidth part on which a wireless device is required to perform random access transmission. A wireless device can also be configured to view the initial bandwidth part specified or indicated in the received paging message as a mandatory initial bandwidth part. In such an embodiment, the wireless device does not determine one of the multiple initial bandwidth parts on which to perform random access procedures, but instead performs random access on whichever of the multiple initial bandwidth parts is indicated/specified in the paging message. In such an embodiment, the network node may only specify or indicate one of the multiple bandwidth parts provided by the network node in the paging message. In this way, a wireless device that is not configured to determine a preferred initial bandwidth part from the plurality of initial bandwidth parts can still take advantage of multiple initial bandwidth parts.

FIG. 11 is a flow-diagram of a representative method of determining an initial bandwidth part for random access transmission based on a paging method, in accordance with an embodiment not falling under the scope of protection of the present claims. A paging method can be provided to a wireless device at step 272. The paging method can include an indication of a preferred bandwidth part of multiple initial bandwidth parts provided by a network node. In response to the paging method, the wireless device can perform random access on the indicated initial bandwidth part at step 274.

As noted above, a network node of the communications network can offer more than one initial bandwidth part for random access by a wireless device initiating contact with the network node during a handover procedure from another network node. In accordance with an embodiment, a handover procedure can include an evaluation by a wireless device of the multiple initial BWPs provided by the network node servicing the cell to which a wireless device is to be handed over. Based on the evaluation, the wireless device can determine the provided initial BWP that indicates a good probability for a successful random access transmission with respect to channel access over the (e.g., unlicensed) band of the provided initial bandwidth parts.

### Conclusion

Although the flow diagrams and signaling diagrams in the present application are illustrated in a logical progression, the illustrated blocks and/or signaling steps of the figures and diagrams may be carried out in other orders and/or with concurrence between two or more blocks/steps. Therefore, the illustrated flow diagrams and signaling diagrams may be altered (including omitting steps). Further, it is contemplated that the steps of different figures and diagrams may be combined in any logical order to form embodiments having features from various figures and diagrams.

## Claims

1. A method performed by a network node (12) for providing access to a wireless communications system (10), wherein a carrier/system bandwidth (40) of the wireless communications system (10) comprises a set of bandwidth parts (47, 48, 49) and the network node is configured with a plurality of initial bandwidth parts (47, 48) selected from the set of bandwidth parts (47, 48, 49) for initial network access on an unlicensed spectrum, the method comprising:
broadcasting control information (88), wherein the control information is indicative of the plurality of initial bandwidth parts (47, 48);
receiving a random access transmission (94) from a wireless device (14) on one initial bandwidth part of the plurality of initial bandwidth parts (47, 48)
indicating, in the control information (88), a second plurality of initial bandwidth parts (50, 51) provided by a second network node (106);
receiving a candidate cell measurement report (208) from the wireless device that reports measurements (202, 204) of the second plurality of initial bandwidth parts (50, 51) provided by the second network node (106); and
transmitting a handover command (124, 212) based on the received candidate cell measurement report;
wherein the cell measurement report (236) includes a measurement trigger event (236),
wherein the measurement trigger event indicates that at least one initial bandwidth part of the second plurality of initial bandwidth parts (50, 51) provided by the second network node (106) has met a measurement trigger condition (234), and
wherein the handover command (124, 212, 238) prompts random access (126) between the wireless device and the second network node on one initial bandwidth part of the second plurality of initial bandwidth parts (50, 51).

2. The method according to claim 1, further comprising:
determining network condition information (150) indicative of respective signal quality of the plurality of initial bandwidth parts (47, 48); and
including the network condition information (150) in the control information (88).

3. The method according to any of the preceding claims, further comprising:
providing a paging message (272) including an indication of a preferred initial bandwidth part of the plurality of initial bandwidth parts.

4. The method according to any one of the preceding claims, wherein the handover command (124, 212, 238) indicates the one initial bandwidth part of the second plurality of initial bandwidth parts (50, 51) on which random access is performed.

5. A method performed by a wireless device (14) to initiate uplink communication with a first network node (12) of a wireless communications system (10) configured with a set of bandwidth parts (47, 48, 49), comprising:
receiving control information (90) from the first network node (12) of the wireless communications system, wherein the control information (90) is indicative of a plurality of initial bandwidth parts (47, 48) selected from the set of bandwidth parts (47, 48, 49) for initial network access on an unlicensed spectrum provided by the wireless communications system (10);
performing a random access transmission (94) on one initial bandwidth part of the plurality of initial bandwidth parts (47, 48),
determining (234), based on the candidate cell measurement (202) performed on the second plurality of initial bandwidth parts (50, 51) provided by the second network node (106), that a measurement trigger condition (234) has been met with respect to at least one initial bandwidth part of the second plurality of initial bandwidth parts (50, 51);
reporting (236) a measurement trigger event to the first network node (12) indicating that the at least one initial bandwidth part of the second plurality of initial bandwidth parts (50, 51) provided by the second network node (106) has met the measurement trigger condition;
receiving from the first network node, in response to the measurement trigger event, a conditional handover command (238, 254) that prompts random access between the wireless device and the second network node;
determining (256) based on the candidate cell measurement (202, 256) performed on the second plurality of initial bandwidth parts (50, 51) provided by the second network node (106) a particular initial bandwidth part of the second plurality of initial bandwidth parts (50,51) on which to perform random access; and
performing random access (126) on the particular initial bandwidth part of the second plurality of initial bandwidth parts (50, 51).

6. The method according to claim 5, further comprising:
receiving network condition information (152) in the control information (88) indicative of respective signal quality of the plurality of initial bandwidth parts (47, 48); and
determining (154), based on the network condition information (154), the one initial bandwidth part of the plurality of initial bandwidth parts (47, 48) on which random access is performed (156).

7. The method according to any of claims 5 or 6, further comprising:
receiving (272) a paging message from the first network node (12) including an indication of a preferred initial bandwidth part of the plurality of initial bandwidth parts (47, 48); and
determining (274), based on the indication of the preferred initial bandwidth part of the plurality of initial bandwidth parts (47, 48)), the initial bandwidth part of the plurality of initial bandwidth parts (47, 48) on which random access is performed.

8. The method according to any of claims 5-7, further comprising:
performing a candidate cell measurement (202) on a second plurality of initial bandwidth parts (50, 51) provided by a second network node (106), wherein the second plurality of initial bandwidth parts (50, 51) provided by the second network node (106) are indicated in the received control information (88) from the first network node (84, 104); and
providing a candidate cell measurement report (208, 210), based on the candidate cell measurement (202), to the first network node (84, 104).

9. A network node (12) in a wireless communication system (10), comprising:
a wireless interface (28) over which wireless communications with wireless communications devices (14) are carried out on a set of bandwidth parts (47, 48, 49) of a system bandwidth (40); and
a control circuit (18) configured to manage initial network access by the wireless communications devices (14), wherein the control circuit (18) causes the network node (12) to carry out the method according to any of claims 1-4.

10. A wireless communications device (14), comprising:
a wireless interface (38) over which wireless communications with a network node (12) are carried out on a set of bandwidth parts (47, 48, 49) of a system bandwidth (40); and
a control circuit (30) configured to control the wireless communications device (14), wherein the control circuit (30) configures the wireless communications device (14) to carry out the method according to any of claims 5-8.

11. A wireless communications system (10), comprising:
a first network node (104), wherein the first network node (104) is connected (110) to a wireless device (102);
a second network node (106), wherein the second network node (106) provides a plurality of initial bandwidth parts (50, 51) configured for random access by a wireless device (102) on unlicensed spectrum;
wherein the first network node (104) sends a command signal (112) including instructions to perform candidate cell measurements on the second network node (106);
wherein the second network node (106) broadcasts control information (114) indicative of the plurality of initial bandwidth parts (50, 51);
wherein the wireless device (102) receives the broadcast control information (114), determines (116) from the broadcast control information (114), the plurality of initial bandwidth parts (50, 51) provided by the second network node (106), performs measurements (118) on the plurality of initial bandwidth parts (50, 51) provided by the second network node (106), and reports (120) the measurements (118) to the first network node (104);
wherein the first network node determines, based on the reported measurements (120), that a handover condition is met (122) with respect to at least one initial bandwidth parts of the plurality of initial bandwidth parts (50, 51) provided by the second network node (106) and sends a handover command (124) to the wireless device (102); and
wherein the wireless device performs random access transmission (126) on an initial bandwidth part of the plurality of initial bandwidth parts (50, 51) provided by the second network node (106).

## Patentansprüche

1. Verfahren, das durch einen Netzwerkknoten (12) ausgeführt wird, zum Bereitstellen eines Zugriffs auf ein Drahtloskommunikationssystem (10), wobei eine Träger-/Systembandbreite (40) des Drahtloskommunikationssystems (10) einen Satz von Bandbreitenteilen (47, 48, 49) umfasst und der Netzwerkknoten mit einer Vielzahl von anfänglichen Bandbreitenteilen (47, 48) konfiguriert ist, die aus dem Satz von Bandbreitenteilen (47, 48, 49) für einen anfänglichen Netzwerkzugriff auf einem nicht lizenzierten Spektrum ausgewählt sind, das Verfahren umfassend:
Rundsenden von Steuerinformationen (88), wobei die Steuerinformationen die Vielzahl von anfänglichen Bandbreitenteilen (47, 48) angeben;
Empfangen einer Direktzugriffsübertragung (94) von einer drahtlosen Vorrichtung (14) auf einem anfänglichen Bandbreitenteil der Vielzahl von anfänglichen Bandbreitenteilen (47, 48)
Angeben, in den Steuerinformationen (88), einer zweiten Vielzahl von anfänglichen Bandbreitenteilen (50, 51), die durch einen zweiten Netzwerkknoten (106) bereitgestellt wird;
Empfangen einer Kandidatenzellenmessungsmeldung (208) von der drahtlosen Vorrichtung, die Messungen (202, 204) der zweiten Vielzahl von anfänglichen Bandbreitenteilen (50, 51) meldet, die durch den zweiten Netzwerkknoten (106) bereitgestellt wird; und
Übertragen eines Übergabebefehls (124, 212) basierend auf der empfangenen Kandidatenzellenmessungsmeldung;
wobei die Zellenmessungsmeldung (236) ein Messungsauslöseereignis (236) einschließt,
wobei das Messungsauslöseereignis angibt, dass mindestens ein anfänglicher Bandbreitenteil der zweiten Vielzahl von anfänglichen Bandbreitenteilen (50, 51), die durch den zweiten Netzwerkknoten (106) bereitgestellt wird, eine Messungsauslösebedingung (234) erfüllt hat, und
wobei der Übergabebefehl (124, 212, 238) einen Direktzugriff (126) zwischen der drahtlosen Vorrichtung und dem zweiten Netzwerkknoten auf einem anfänglichen Bandbreitenteil der zweiten Vielzahl von anfänglichen Bandbreitenteilen (50, 51) veranlasst.

2. Verfahren nach Anspruch 1, ferner umfassend:
Bestimmen von Netzwerkbedingungsinformationen (150), die eine jeweilige Signalqualität der Vielzahl von anfänglichen Bandbreitenteilen (47, 48) angeben; und
Einschließen der Netzzustandsinformationen (150) in die Steuerinformationen (88).

3. Verfahren nach einem der vorstehenden Ansprüche, ferner umfassend:
Bereitstellen eines Funkrufs (272) einschließlich einer Angabe eines bevorzugten anfänglichen Bandbreitenteils der Vielzahl von anfänglichen Bandbreitenteilen.

4. Verfahren nach einem der vorstehenden Ansprüche, wobei der Übergabebefehl (124, 212, 238) den einen anfänglichen Bandbreitenteil der zweiten Vielzahl von anfänglichen Bandbreitenteilen (50, 51) angibt, an dem der Direktzugriff durchgeführt wird.

5. Verfahren, das durch eine drahtlose Vorrichtung (14) durchgeführt wird, um eine Uplink-Kommunikation mit einem ersten Netzwerkknoten (12) eines Drahtloskommunikationssystems (10) zu initiieren, das mit einem Satz von Bandbreitenteilen (47, 48, 49) konfiguriert ist, umfassend:
Empfangen von Steuerinformationen (90) von dem ersten Netzwerkknoten (12) des Drahtloskommunikationssystems, wobei die Steuerinformationen (90) eine Vielzahl von anfänglichen Bandbreitenteilen (47, 48) angeben, die aus dem Satz von Bandbreitenteilen (47, 48, 49) für den anfänglichen Netzwerkzugriff auf einem nicht lizenzierten Spektrum ausgewählt sind, das durch das Drahtloskommunikationssystem (10) bereitgestellt wird;
Durchführen einer Direktzugriffsübertragung (94) an einem anfänglichen Bandbreitenteil der Vielzahl von anfänglichen Bandbreitenteilen (47, 48),
Bestimmen (234), basierend auf der Kandidatenzellenmessung (202), die an der zweiten Vielzahl von anfänglichen Bandbreitenteilen (50, 51) durchgeführt wird, die durch den zweiten Netzwerkknoten (106) bereitgestellt wird, dass eine Messungsauslösebedingung (234) in Bezug auf mindestens einen anfänglichen Bandbreitenteil der zweiten Vielzahl von anfänglichen Bandbreitenteilen (50, 51) erfüllt wurde;
Melden (236) eines Messungsauslöseereignisses an den ersten Netzwerkknoten (12), das angibt, dass mindestens ein anfänglicher Bandbreitenteil der zweiten Vielzahl von anfänglichen Bandbreitenteilen (50, 51), die durch den zweiten Netzwerkknoten (106) bereitgestellt wird, die Messungsauslösebedingung erfüllt hat;
Empfangen, von dem ersten Netzwerkknoten als Reaktion auf das Messungsauslöserereignis, eines Bedingungsübergabebefehls (238, 254), der den Direktzugriff zwischen der drahtlosen Vorrichtung und dem zweiten Netzwerkknoten veranlasst;
Bestimmen (256) basierend auf der Kandidatenzellenmessung (202, 256), die an der zweiten Vielzahl von anfänglichen Bandbreitenteilen (50, 51) durchgeführt wird, die durch den zweiten Netzwerkknoten (106) bereitgestellt wird, eines speziellen anfänglichen Bandbreitenteils der zweiten Vielzahl von anfänglichen Bandbreitenteilen (50, 51), an dem der Direktzugriff durchgeführt werden soll; und
Durchführen des Direktzugriffs (126) an dem bestimmten anfänglichen Bandbreitenteil der zweiten Vielzahl von anfänglichen Bandbreitenteilen (50, 51).

6. Verfahren nach Anspruch 5, ferner umfassend:
Empfangen von Netzwerkbedingungsinformationen (152) in den Steuerinformationen (88), die die jeweilige Signalqualität der Vielzahl von anfänglichen Bandbreitenteilen (47, 48) angeben; und
Bestimmen (154), basierend auf den Netzwerkbedingungsinformationen (154), des einen anfänglichen Bandbreitenteils der Vielzahl von anfänglichen Bandbreitenteilen (47, 48), an dem der Direktzugriff durchgeführt wird (156).

7. Verfahren nach einem der Ansprüche 5 bis 6, ferner umfassend:
Empfangen (272) eines Funkrufs von dem ersten Netzwerkknoten (12), einschließlich einer Angabe eines bevorzugten anfänglichen Bandbreitenteils der Vielzahl von anfänglichen Bandbreitenteilen (47, 48); und
Bestimmen (274), basierend auf der Angabe des bevorzugten anfänglichen Bandbreitenteils der Vielzahl von anfänglichen Bandbreitenteilen (47, 48), des anfänglichen Bandbreitenteils der Vielzahl von anfänglichen Bandbreitenteilen (47, 48), an dem der Direktzugriff durchgeführt wird.

8. Verfahren nach einem der Ansprüche 5 bis 7, ferner umfassend:
Durchführen einer Kandidatenzellenmessung (202) an einer zweiten Vielzahl von anfänglichen Bandbreitenteilen (50, 51), die durch einen zweiten Netzwerkknoten (106) bereitgestellt wird, wobei die zweite Vielzahl von anfänglichen Bandbreitenteilen (50, 51), die durch den zweiten Netzwerkknoten (106) bereitgestellt wird, in den empfangenen Steuerinformationen (88) von dem ersten Netzwerkknoten (84, 104) angegeben sind; und
Bereitstellen einer Kandidatenzellenmessungsmeldung (208, 210), basierend auf der Kandidatenzellenmessung (202), an den ersten Netzwerkknoten (84, 104).

9. Netzwerkknoten (12) in einem Drahtloskommunikationssystem (10), umfassend:
eine drahtlose Schnittstelle (28), über die Drahtloskommunikationen mit Drahtloskommunikationsvorrichtungen (14) auf einem Satz von Bandbreitenteilen (47, 48, 49) einer Systembandbreite (40) vorgenommen werden; und
eine Steuerschaltung (18), die konfiguriert ist, um den anfänglichen Netzwerkzugriff durch die Drahtloskommunikationsvorrichtungen (14) zu verwalten, wobei die Steuerschaltung (18) den Netzwerkknoten (12) dazu bringt, das Verfahren nach einem der Ansprüche 1 bis 4 vorzunehmen.

10. Drahtlose Kommunikationsvorrichtung (14), umfassend:
eine drahtlose Schnittstelle (38), über die Drahtloskommunikationen mit einem Netzwerkknoten (12) auf einem Satz von Bandbreitenteilen (47, 48, 49) einer Systembandbreite (40) vorgenommen werden; und
eine Steuerschaltung (30), die konfiguriert ist, um die Drahtloskommunikationsvorrichtung (14) zu steuern, wobei die Steuerschaltung (30) die Drahtloskommunikationsvorrichtung (14) konfiguriert, um das Verfahren nach einem der Ansprüche 5 bis 8 vorzunehmen.

11. Drahtloskommunikationssystem (10), umfassend:
einen ersten Netzwerkknoten (104), wobei der erste Netzwerkknoten (104) mit einer drahtlosen Vorrichtung (102) verbunden (110) ist;
einen zweiten Netzwerkknoten (106), wobei der zweite Netzwerkknoten (106) eine Vielzahl von anfänglichen Bandbreitenteilen (50, 51) bereitstellt, die für den Direktzugriff durch eine drahtlose Vorrichtung (102) auf einem nicht lizenzierten Spektrum konfiguriert sind;
wobei der erste Netzwerkknoten (104) ein Befehlssignal (112) sendet, einschließlich Anweisungen, um Kandidatenzellenmessungen an dem zweiten Netzwerkknoten (106) durchzuführen;
wobei der zweite Netzwerkknoten (106) Steuerinformationen (114) rundsendet, die die Vielzahl von anfänglichen Bandbreitenteilen (50, 51) angeben;
wobei die drahtlose Vorrichtung (102) die Rundsendungssteuerinformationen (114) empfängt, aus den Rundsendungssteuerinformationen (114) die Vielzahl von anfänglichen Bandbreitenteilen (50, 51) bestimmt (116), die durch den zweiten Netzwerkknoten (106) bereitgestellt wird, Messungen (118) an der Vielzahl von anfänglichen Bandbreitenteilen (50, 51) durchführt, die durch den zweiten Netzwerkknoten (106) bereitgestellt wird, und die Messungen (118) dem ersten Netzwerkknoten (104) meldet (120);
wobei der erste Netzwerkknoten basierend auf den gemeldeten Messungen (120) bestimmt, dass eine Übergabebedingung in Bezug auf mindestens einen anfänglichen Bandbreitenteil der Vielzahl von anfänglichen Bandbreitenteilen (50, 51), die durch den zweiten Netzwerkknoten (106) bereitgestellt wird, erfüllt ist (122), und einen Übergabebefehl (124) an die drahtlose Vorrichtung (102) sendet; und
wobei die drahtlose Vorrichtung eine Direktzugriffsübertragung (126) auf einem anfänglichen Bandbreitenteil der Vielzahl von anfänglichen Bandbreitenteilen (50, 51) durchführt, die durch den zweiten Netzwerkknoten (106) bereitgestellt wird.

## Revendications

1. Procédé mis en oeuvre par un noeud de réseau (12) permettant de fournir un accès à un système de communications sans fil (10), dans lequel une largeur de bande de porteuse/système (40) du système de communications sans fil (10) comprend un ensemble de parties de largeur de bande (47, 48, 49) et le noeud de réseau est configuré avec une pluralité de parties de largeur de bande initiales (47, 48) sélectionnées parmi l'ensemble de parties de largeur de bande (47, 48, 49) pour un accès initial au réseau sur un spectre sans licence, le procédé comprenant :
la diffusion d'informations de commande (88), dans lequel les informations de commande indiquent la pluralité de parties de largeur de bande initiales (47, 48) ;
la réception d'une transmission d'accès aléatoire (94) en provenance d'un dispositif sans fil (14) sur une partie de largeur de bande initiale de la pluralité de parties de largeur de bande initiales (47, 48)
l'indication, dans les informations de commande (88), d'une seconde pluralité de parties de largeur de bande initiales (50, 51) fournies par un second noeud de réseau (106) ;
la réception d'un rapport de mesure de cellule candidate (208) en provenance du dispositif sans fil qui rapporte des mesures (202, 204) de la seconde pluralité de parties de largeur de bande initiales (50, 51) fournies par le second noeud de réseau (106) ; et
la transmission d'une instruction de transfert (124, 212) en fonction du rapport de mesure de cellule candidate reçu ;
dans lequel le rapport de mesure de cellule (236) comporte un événement déclencheur de mesure (236),
dans lequel l'événement déclencheur de mesure indique qu'au moins une partie de largeur de bande initiale de la seconde pluralité de parties de largeur de bande initiales (50, 51) fournies par le second noeud de réseau (106) a respecté une condition de déclenchement de mesure (234), et
dans lequel l'instruction de transfert (124, 212, 238) invite à un accès aléatoire (126) entre le dispositif sans fil et le second noeud de réseau sur une partie de largeur de bande initiale de la seconde pluralité de parties de largeur de bande initiales (50, 51).

2. Procédé selon la revendication 1, comprenant en outre :
la détermination d'informations de condition de réseau (150) indiquant une qualité de signal respective de la pluralité de parties de largeur de bande initiales (47, 48) ; et
l'inclusion des informations de condition de réseau (150) dans les informations de commande (88).

3. Procédé selon l'une quelconque des revendications précédentes, comprenant en outre :
la fourniture d'un message de radiomessagerie (272) comportant une indication d'une partie de largeur de bande initiale préférée de la pluralité de parties de largeur de bande initiales.

4. Procédé selon l'une quelconque des revendications précédentes, dans lequel l'instruction de transfert (124, 212, 238) indique cette partie de largeur de bande initiale de la seconde pluralité de parties de largeur de bande initiales (50, 51) sur laquelle un accès aléatoire est mis en oeuvre.

5. Procédé mis en oeuvre par un dispositif sans fil (14) pour initier une communication en liaison montante avec un premier noeud de réseau (12) d'un système de communications sans fil (10) configuré avec un ensemble de parties de largeur de bande (47, 48, 49), comprenant :
la réception d'informations de commande (90) en provenance du premier noeud de réseau (12) du système de communications sans fil, dans lequel les informations de commande (90) indiquent une pluralité de parties de largeur de bande initiales (47, 48) sélectionnées parmi l'ensemble de parties de largeur de bande (47, 48, 49) pour un accès initial au réseau sur un spectre sans licence fourni par le système de communications sans fil (10) ;
la mise en oeuvre d'une transmission d'accès aléatoire (94) sur une partie de largeur de bande initiale de la pluralité de parties de largeur de bande initiales (47, 48),
la détermination (234), en fonction de la mesure de cellule candidate (202) mise en oeuvre sur la seconde pluralité de parties de largeur de bande initiales (50, 51) fournies par le second noeud de réseau (106), qu'une condition de déclenchement de mesure (234) a été respectée par rapport à au moins une partie de largeur de bande initiale de la seconde pluralité de parties de largeur de bande initiales (50, 51) ;
le rapport (236) d'un événement déclencheur de mesure au premier noeud de réseau (12) indiquant que l'au moins une partie de largeur de bande initiale de la seconde pluralité de parties de largeur de bande initiales (50, 51) fournies par le second noeud de réseau (106) a respecté la condition de déclenchement de mesure ;
la réception en provenance du premier noeud de réseau, en réponse à l'événement déclencheur de mesure, d'une instruction de transfert conditionnelle (238, 254) qui invite à un accès aléatoire entre le dispositif sans fil et le second noeud de réseau ;
la détermination (256) en fonction de la mesure de cellule candidate (202, 256) mise en oeuvre sur la seconde pluralité de parties de largeur de bande initiales (50, 51) fournies par le second noeud de réseau (106) d'une partie de largeur de bande initiale particulière de la seconde pluralité de parties de largeur de bande initiales (50,51) sur laquelle il faut mettre en oeuvre un accès aléatoire ; et
la mise en oeuvre d'un accès aléatoire (126) sur la partie de largeur de bande initiale particulière de la seconde pluralité de parties de largeur de bande initiales (50, 51).

6. Procédé selon la revendication 5, comprenant en outre :
la réception d'informations de condition de réseau (152) dans les informations de commande (88) indiquant une qualité de signal respective de la pluralité de parties de largeur de bande initiales (47, 48) ; et
la détermination (154), en fonction des informations de condition de réseau (154), de cette partie de largeur de bande initiale de la pluralité de parties de largeur de bande initiales (47, 48) sur laquelle un accès aléatoire est mis en oeuvre (156).

7. Procédé selon l'une quelconque des revendications 5 ou 6, comprenant en outre :
la réception (272) d'un message de radiomessagerie en provenance du premier noeud de réseau (12) comportant une indication d'une largeur de bande initiale préférée de la pluralité de parties de largeur de bande initiales (47, 48) ; et
la détermination (274), en fonction de l'indication de la largeur de bande initiale préférée de la pluralité de parties de largeur de bande initiales (47, 48)), de la partie de largeur de bande initiale de la pluralité de parties de largeur de bande initiales (47, 48) sur laquelle un accès aléatoire est mis en oeuvre.

8. Procédé selon l'une quelconque des revendications 5 à 7, comprenant en outre :
la mise en oeuvre d'une mesure de cellule candidate (202) sur une seconde pluralité de parties de largeur de bande initiales (50, 51) fournies par un second noeud de réseau (106), dans lequel la seconde pluralité de parties de largeur de bande initiales (50, 51) fournies par le second noeud de réseau (106) sont indiquées dans les informations de commande reçues (88) en provenance du premier noeud de réseau (84, 104) ; et
la fourniture d'un rapport de mesure de cellule candidate (208, 210), en fonction de la mesure de cellule candidate (202), au premier noeud de réseau (84, 104).

9. Noeud de réseau (12) dans un système de communication sans fil (10), comprenant :
une interface sans fil (28) sur laquelle des communications sans fil avec des dispositifs de communication sans fil (14) sont effectuées sur un ensemble de parties de largeur de bande (47, 48, 49) d'une largeur de bande de système (40) ; et
un circuit de commande (18) configuré pour gérer un accès initial au réseau par les dispositifs de communication sans fil (14), dans lequel le circuit de commande (18) amène le noeud de réseau (12) à effectuer le procédé selon l'une quelconque des revendications 1 à 4.

10. Dispositif de communications sans fil (14), comprenant :
une interface sans fil (38) sur laquelle des communications sans fil avec un noeud de réseau (12) sont effectuées sur un ensemble de parties de largeur de bande (47, 48, 49) d'une largeur de bande de système (40) ; et
un circuit de commande (30) configuré pour commander le dispositif de communications sans fil (14), dans lequel le circuit de commande (30) configure le dispositif de communications sans fil (14) pour effectuer le procédé selon l'une quelconque des revendications 5 à 8.

11. Système de communications sans fil (10), comprenant :
un premier noeud de réseau (104), dans lequel le premier noeud de réseau (104) est connecté (110) à un dispositif sans fil (102) ;
un second noeud de réseau (106), dans lequel le second noeud de réseau (106) fournit une pluralité de parties de largeur de bande initiales (50, 51) configurées pour un accès aléatoire par un dispositif sans fil (102) sur un spectre sans licence ;
dans lequel le premier noeud de réseau (104) envoie un signal d'instruction (112) comportant des consignes pour mettre en oeuvre des mesures de cellule candidate sur le second noeud de réseau (106) ;
dans lequel le second noeud de réseau (106) diffuse des informations de commande (114) indiquant la pluralité de parties de largeur de bande initiales (50, 51) ;
dans lequel le dispositif sans fil (102) reçoit les informations de commande (114) diffusées, détermine (116) à partir des informations de commande (114) diffusées, la pluralité de parties de largeur de bande initiales (50, 51) fournies par le second noeud de réseau (106), met en oeuvre des mesures (118) sur la pluralité de parties de largeur de bande initiales (50, 51) fournies par le second noeud de réseau (106), et rapporte (120) les mesures (118) au premier noeud de réseau (104) ;
dans lequel le premier noeud de réseau détermine, en fonction des mesures rapportées (120), qu'une condition de transfert est respectée (122) par rapport à au moins l'une des parties de largeur de bande initiales de la pluralité de parties de largeur de bande initiales (50, 51) fournies par le second noeud de réseau (106) et envoie une instruction de transfert (124) au dispositif sans fil (102) ; et
dans lequel le dispositif sans fil met en oeuvre une transmission d'accès aléatoire (126) sur une partie de largeur de bande initiale de la pluralité de parties de largeur de bande initiales (50, 51) fournies par le second noeud de réseau (106).
